Europäisches Patentamt

European Patent Office

Office européen des brevets

(19)

(11) Numéro de publication: **0 136 199**
**A2**

(12)

# DEMANDE DE BREVET EUROPEEN

(21) Numéro de dépôt: **84401556.0**

(51) Int. Cl.⁴: **G 05 B 19/04**

(22) Date de dépôt: **25.07.84**

(30) Priorité: **01.08.83 FR 8312762**

(43) Date de publication de la demande: **03.04.85**
**Bulletin 85/14**

(84) Etats contractants désignés: **AT BE CH DE GB IT LI LU
NL SE**

(71) Demandeur: **CROUZET, 128, Avenue de la République,
F-75011 Paris (FR)**

(72) Inventeur: **Cadot, Robert, 25, rue Jules Védrines,
F-26027 Valence Cédex (FR)**
Inventeur: **Marty, Jacques, 25, rue Jules Védrines,
F-26027 Valence Cédex (FR)**

(74) Mandataire: **Bloch, Robert et al, 39 avenue de Friedland,
F-75008 Paris (FR)**

(54) **Commande sequentielle pour processus industriel.**

(57) Commande séquentielle pour processus industriel comprenant une unité centrale associée à des modules d'entrées et des modules de sorties permettant de décrire le processus à l'aide de fonctions élémentaires grâce à l'utilisation d'un interpréteur qui les transforme en un logiciel assimilable par son microprocesseur.

Cette commande permet de réaliser des composants d'automatismes destinés, par exemple, au pilotage et au contrôle des machines à cycles répétitifs.

1

## Commande séquentielle pour processus industriel

La présente invention concerne les systèmes de commande séquentielle du type comportant une unité centrale associée à des modules d'entrée, des modules de sortie, des capteurs d'informations extérieures, des moyens pour acheminer des ordres vers l'extérieur et destinés à piloter des processus industriels.

Pour utiliser de telles commandes, il est nécessaire de décrire et de mémoriser toutes les étapes successives du processus. Suivant le microprocesseur utilisé dans la commande cette description préalable nécessite des outils d'expression, spécifiques à la conception interne dudit microprocesseur, tels que, échelles à relais, équations Booléennes, instructions d'assembleur, dont l'utilisation est généralement éloignée du raisonnement logique du concepteur du processus.

La commande séquentielle objet de l'invention a pour but d'éviter cet inconvénient. Dans celle-ci en effet la description des différentes étapes du processus se fait à partir de fonctions élémentaires. Ces fonctions sont au nombre de trois. Ce sont :

. la fonction FAIRE,

. la fonction ATTENDRE,

. et la fonction ALLER A.

A l'aide de ces fonctions élémentaires on peut décrire toutes les phases d'un processus industriel. Le rôle d'une commande séquentielle consiste à établir un dialogue avec un processus pour en suivre et contrôler le déroulement par rapport à la description préétablie. Pour cela, elle reçoit par un module d'ENTREE, des informations extérieures agissant sur les états 0 ou 1 d'une pluralité de bornes.

Selon les étapes du processus, ces états entraînent une configuration précise des bornes d'un module de SORTIE utilisé pour transmettre des ordres vers l'extérieur.

La commande séquentielle selon l'invention comprend, en plus d'un microprocesseur classique, un élément électronique dit "interprêteur". Le rôle de cet élément est d'interprêter la description du processus élaboré par l'utilisateur au moyen des fonctions simples, pour la rendre assimilable par les instructions spécifiques du microprocesseur utilisé. Selon le type du microprocesseur utilisé, ces instructions spécifiques peuvent faire appel à des logiciels différents mais, grâce à l'interprêteur, la description du processus pourra toujours se faire à partir des fonctions de base élémentaires FAIRE - ATTENDRE - ALLER A et/ou de fonctions classiques annexes telles que, le saut conditionnel, la prédisposition et la décrémentation de compteurs.

Cette description a pour support une mémoire amovible, par exemple du type REPROM, destinée à être programmée par des moyens classiques extérieurs à la commande, qui peuvent être regroupés dans une valise dite de programmation. Cette mémoire est ensuite introduite dans la commande séquentielle, pour exploitation.

La fonction FAIRE consiste en des moyens pour commander l'état des bornes du module de sortie, des moyens pour sauter à une étape quelconque du cycle séquentiel, des moyens de comptage tels que prédisposer et décompter et des moyens d'appel de sous programme.

La fonction ATTENDRE consiste en des moyens de définition d'une transition en utilisant l'état des entrées et/ou le temps et des équations logiques, pour vérifier l'avancement des phases du processus.

La fonction ALLER A consiste en des moyens pour désigner et définir la prochaine étape du cycle.

Le dessin annexé illustre, à titre d'exemple, un mode de réalisation d'une commande séquentielle selon l'invention.

La fig. 1 est un schéma de la commande séquentielle, reliée à un processus.

La fig. 2 est un organigramme des fonctions élémentaires.

La fig. 3 est un synoptique de l'unité centrale de la commande séquentielle.

La fig. 4 représente un module d'ENTREE.

La fig. 5 représente un module de SORTIE.

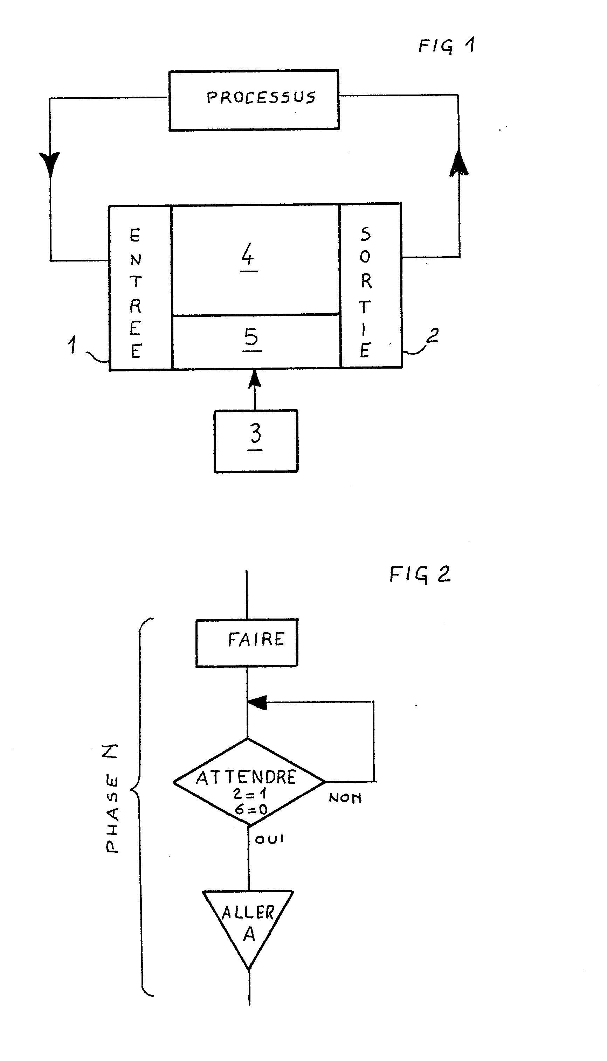

Telle que représentée, Fig. 1, la commande séquentielle comprend : une unité centrale 4 avec son microprocesseur, sa mémoire moniteur, un module d'Entrée 1, un module de Sortie 2 et une mémoire programmable 3 qui peut avantageusement être amovible. La liaison entre la mémoire 3 et l'unité centrale 4 est réalisée au travers d'un interprêteur 5 qui rend les informations, stockées dans la mémoire 3, assimilables par le microprocesseur, utilisé dans l'unité centrale, quel que soit son mode de fonctionnement.

L'interprêteur exploite les informations, contenues dans cette mémoire, qui décrivent toutes les phases du processus à commander.

Ces informations consistent en :

- un mot de contrôle précisant le type d'action définie par la fonction FAIRE;

- la désignation des sorties à activer, définies par la fonction FAIRE;

- la désignation et l'état des entrées à surveiller et définies par la fonction ALLER A.

L'interpréteur lit toutes ces informations et fait correspondre leur code à des suites d'instructions écrites dans le langage propre du microprocesseur utilisé dans l'unité centrale.

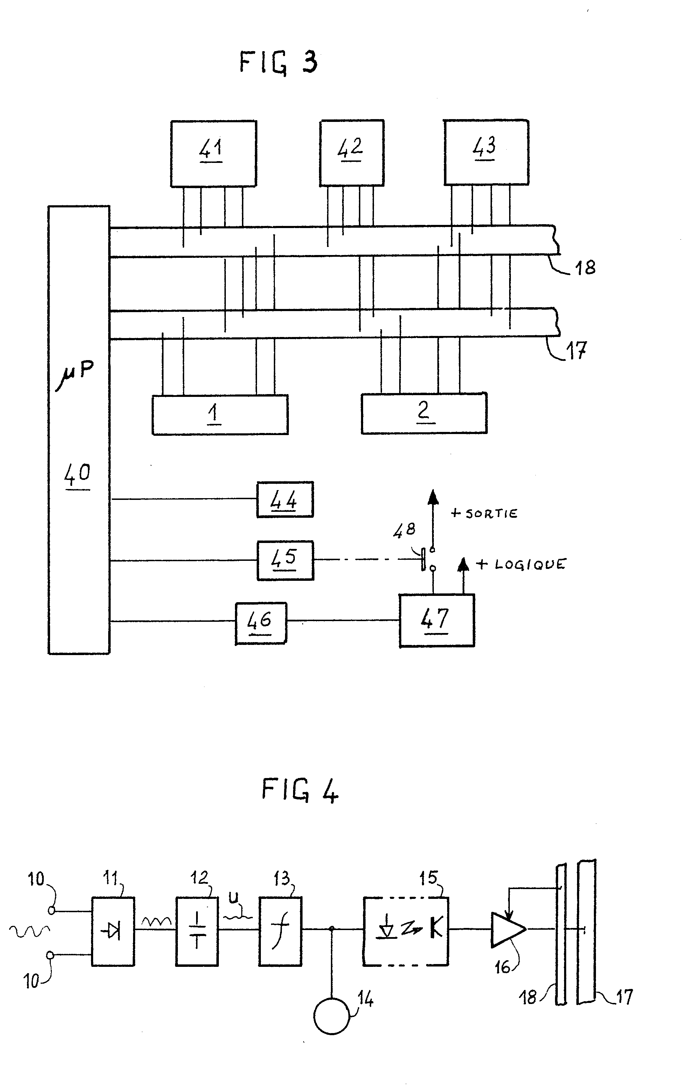

Le module d'Entrée 1, fig. 4, consiste en une pluralité d'éléments logiques dont les bornes prennent un état 0 ou 1 en fonction des informations extérieures venant du processus ou de tout autre capteur. Ces informations sont représentées par une tension dont l'absence ou la présence détermine l'état des éléments logiques.

Chaque entrée possède deux bornes 10, sur lesquelles est appliquée ou non une tension, suivies d'un élément redresseur 11 suivi d'un filtre 12 du type RC et d'un détecteur de seuil 13 qui a pour rôle de s'assurer que le niveau de la tension U est suffisant. Si ce niveau est supérieur à un seuil prédéterminé, l'Entrée est mise à l'état 1, elle sera à l'état 0 dans le cas contraire.

La partie extérieure de chaque entrée, comprenant les éléments 11, 12, 13 et une visualisation 14, est isolée galvaniquement, par exemple au moyen d'un photocoupleur 15 de la partie interne de la commande séquentielle. Le signal d'entrée est appliqué sur un bus de données 17 après amplification dans un élément 16.

La lecture de l'état de chaque entrée se fait au moyen d'un bus adresse 18.

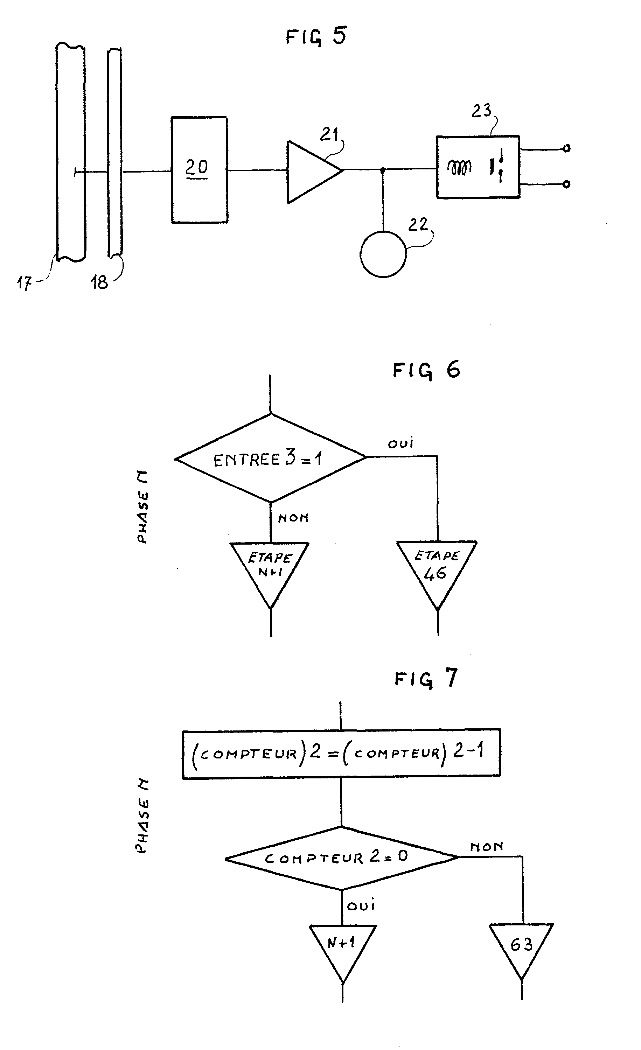

Le module de Sortie, fig. 5, comprend des éléments mécaniques ou statiques, par exemple des relais 23, dont l'état passant ou non passant, déterminé par la fonction FAIRE, permet d'exciter des actionneurs agissant sur le processus.

Chaque Sortie est composée d'un interface 20 lui permettant de mémoriser l'état fugitif de la sortie présente sur le bus de données 17 et correspondant à son adresse. Un amplificateur 21 permet d'alimenter le relais 23. Un élément de visualisation 22 permet de connaître, sur un panneau d'affichage, l'état de chacune des sorties.

L'unité centrale, fig. 3, comprend, un microprocesseur 40, une mémoire moniteur 41 contenant le logiciel d'exploitation de la commande séquentielle, une mémoire vive 43 du type non volatile permettant de conserver le contexte de la commande séquentielle en cas de disparition de l'alimentation, et des bus d'adresses 18 et de données 17 auxquels sont connectés les modules d'Entrée 1 et de Sortie 2. Enfin la mémoire 3, par exemple du type REPROM, contenant la description du processus à commander est reliée de façon amovible sur les bus de données et d'adresses. Un afficheur 44 permet de visualiser les numéros des diverses étapes du processus ainsi que la temporisation au cours d'une phase de fonctionnement s'il y a lieu.

En outre, l'unité centrale comprend de façon classique un dispositif d'autosurveillance 45, un dispositif de détection de coupure de courant 46 et une alimentation 47. Un interrupteur 48, piloté par le dispositif de surveillance 45 permet de désactiver toutes les sorties en cas de défaut interne de l'unité centrale.

Chaque phase du processus, fig. 2, se déroule de la façon suivante.

La fonction FAIRE peut :

- soit définir l'état des bornes de Sortie, ce qui correspond pour chaque phase à des ordres donnés vers l'extérieur;
- soit permettre de sauter conditionnellement à une phase quelconque du processus selon le résultat d'une équation logique faisant intervenir l'état des entrées. Si le résultat de cette équation est satisfait, par exemple entrée 3 = 1, fig. 6, on passe à l'étape définie par le saut (étape 46), s'il n'est pas satisfait on passe à l'étape suivante N + 1;
- soit prédisposer un compteur à une valeur quelconque;
- soit décompter une unité à un comteur et vérifier si le résultat est égal à zéro. Par exemple, fig. 7, si le résultat est différent de zéro on passe à l'étape 63, s'il est égal à zéro on passe à l'étape N + 1;
- soit appeler un sous-programme.

La fonction ATTENDRE définit, au cours de chaque phase, les conditions d'état des Entrées, conditions qui doivent être satisfaites pour pouvoir passer à la phase suivante définie par la fonction ALLER A.

Tant que ces conditions ne seront pas satisfaites la commande séquentielle stationnera sur la phase.

Les états des bornes d'entrée peuvent être combinés en équation logiques utilisant des opérateurs classiques tels que ET, OU, ( ) ET, ( ) OU, et la négation.

La fonction ALLER A permet de définir le numéro de la prochaine étape du cycle, c'est-à-dire la fonction FAIRE de la phase suivante, ou indiquer le retour à un programme appelant pour terminer l'exécution d'un sous-programme. Il est prévu en outre de pouvoir interrompre à tout moment le déroulement d'une phase lorsqu'un état particulier des entrées est détecté. Cet état peut être décrit dans le programme ainsi que les actions qui doivent découler de l'apparition de cette configuration. Ceci permet de traiter prioritairement des évènements extérieurs et notamment ceux dont il faut rester maîtres pour des raisons de sécurité.

La commande séquentielle objet de l'invention de conception simple, compacte, dont les divers éléments sont fixés sur une platine métallique, servant de radiateur aux composants électroniques, permet de réaliser des composants d'automatismes, destinés par exemple au pilotage et au contrôle des machines à cycles répétitifs. Elle présente en outre l'avantage de permettre la description de processus industriels sans faire appel à la connaissance des divers langages utilisés en informatique.

Revendications

1. Commande séquentielle pour processus industriel comportant, une unité centrale (4), des modules d'ENTREE (1), des modules de SORTIE (2), des capteurs d'informations extérieures et des moyens pour acheminer des ordres vers l'extérieur, caractérisée par le fait qu'elle comporte des moyens de description du processus par des fonctions élémentaires et des moyens (5) d'interprêtation desdites fonctions pour les rendre assimilables par l'unité centrale.

2. Commande séquentielle, selon la revendication 1, caractérisée en ce que :

- la fonction FAIRE consiste en
. des moyens pour commander l'état des bornes de sortie (SORTIE)
. des moyens pour sauter à une étape quelconque du cycle séquentiel
. des moyens de comptage (prédisposer et décompter)
. des moyens d'appel de sous-programme.

- la fonction ATTENDRE consiste en des moyens de définition d'une transition à partir d'équations logiques ou de temporisations.

- la fonction ALLER A consiste en des moyens pour désigner la prochaine étape du cycle séquentiel.

3. Commande séquentielle, selon les revendications 1 et 2, caractérisée en ce qu'elle comprend des moyens (43) pour assurer la sauvegarde de l'état des informations internes lors d'une coupure d'alimentation et des moyens (45) pour restituer les informations lors du retour de la

0136199

tension d'alimentation.

4. Commande séquentielle, selon l'une des revendications 1 à 3, caractérisée en ce qu'elle comporte des moyens pour traiter prioritairement des évènements extérieurs, au cours du processus.

PLANCHE I/3    0136199

FIG 1

FIG 2

FIG 3

+ SORTIE

+ LOGIQUE

FIG 4

FIG 5

FIG 6

FIG 7

# 0136199

## RAPPORT DE RECHERCHE EUROPEENNE

Office européen
des brevets

Numéro de la demande

EP 84 40 1556

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 975 622 (R. HORN et al.) * Abrégé; figures 1,2; colonne 2, ligne 37 - colonne 3, ligne 11; colonne 3, ligne 40 - colonne 10, ligne 9; colonne 13, ligne 43 - colonne 23, ligne 21 * | 1,2 | G 05 B 19/04 |
| | --- | | |
| X | IEEE 1980 IECI PROCEEDINGS, 17-20 mars 1980, The Industrial Electronics and Control Instrumentation Society, Philadelphia, US; Y. SHIMOKAWA et al.: "A microprocessor-based high level programmable controller" * Abrégé; page 65, colonne de gauche, ligne 1 - page 68, colonne de gauche, ligne 32 * | 1,4 | |
| | | | **DOMAINES TECHNIQUES RECHERCHES (Int. Cl.4)** |
| A | US-A-4 291 388 (D.R. ECKER et al.) * Abrégé * | 3 | G 05 B |
| | ----- | | |

Le présent rapport de recherche a été établi pour toutes les revendications

| Lieu de la recherche | Date d'achèvement de la recherche | Examinateur |
|---|---|---|
| LA HAYE | 19-11-1984 | CORNILLIE O.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82